# EUROPEAN PATENT APPLICATION

(11) **EP 2 829 818 A2**
(43) Date of publication of application: **28.01.2015**
(21) Application number: 13196918.0
(22) Date of filing: 12.12.2013
(51) Int. Cl.: F24H 4/04, F25B 30/02, F24D 11/02, F24D 17/02, F24H 1/20, F24H 9/12, F24H 9/20

(54) **Heat pump water heater**

(30) Priority: 26.07.2013 CN 201310320865
(71) Applicant: GD Midea Heating & Ventilating Equipment Co., Ltd., 528311 Foshan Guangdong (CN); Midea Group Co., Ltd., 528311 Foshan Guangdong (CN)
(72) Inventor: Luo, Mingwen, 528311 Guangdong (CN)
(74) Representative: Maiwald Patentanwalts GmbH

(57) **Abstract**

A heat pump water heater and a water tank assembly for the heat pump water heater are provided. The heat pump water heater includes: a water tank (10) having a circulating water inlet (11) and a circulating water outlet (12); a hot water supply coil (20) disposed within the water tank (10) and having a cold water inlet (21) and a hot water outlet (22); a compressor (30); a condenser coil (40) disposed within the water tank (10), an inlet of the condenser coil (40) being connected with the refrigerant outlet of the compressor (30); a throttling unit (50) having an inlet connected with an outlet of the condenser coil (40); an evaporator (60) having an inlet connected with an outlet of the throttling unit (50) and an outlet connected with the refrigerant inlet of the compressor (60); a fan (80) disposed adjacent to the evaporator (60).

## Description

### FIELD

Embodiments of the present invention relate to water heaters, and more particularly, embodiments of the present invention relate to a heat pump water heater.

### BACKGROUND

Currently, heat pump water heaters in the related art can provide both hot water for domesticity and hot water for floor heating. A water tank of such a heat pump water heater is used to store hot water for domesticity, so that it is possible to obtain hot water directly from the water tank when the hot water for domesticity is needed. A volume of the water tank is generally large, and there will be a large number of legionellae in the water tank after the heat pump water heater is unused for a period of time, which will do harm to a user's health if the water inside the water tank is directly provided as the domestic water. Thus, when such a heat pump water heater is reused after being unused for a period of time, the water tank is generally refilled with fresh water and then reheated, which causes both a waste of water resource and a waste of electric energy. Furthermore, as water inside a floor heating coil is completely isolated from the water inside the water tank, the water inside the floor heating coil is heated by performing a secondary heat exchange with the water inside the water tank, thus making the floor heating ineffective.

### SUMMARY

The objective of the present invention is to solve at least one of the problems in the related art.

For this, embodiments of the present invention provide a heat pump water heater, which at least has advantages of high floor heating efficiency, reduced waste of water resource and reduced waste of electric energy.

According to embodiments of the present invention, a heat pump water heater is provided. The heat pump water heater includes: a water tank having a circulating water inlet and a circulating water outlet communicated with an interior of the water tank; a hot water supply coil disposed within the water tank and having a cold water inlet and a hot water outlet isolated from the interior of the water tank; a compressor having a refrigerant inlet and a refrigerant outlet; a condenser coil disposed within the water tank for heating water contained in the water tank, an inlet of the condenser coil being connected with the refrigerant outlet of the compressor; a throttling unit having an inlet connected with an outlet of the condenser coil; an evaporator having an inlet connected with an outlet of the throttling unit and an outlet connected with the refrigerant inlet of the compressor; and a fan disposed adjacent to the evaporator.

With the heat pump water heater according to embodiments of the present invention, the interior of the water tank can be directly connected with a floor heating system via the circulating water inlet and the circulating water outlet of the floor heating system, and thus hot water inside the water tank can be directly provided for the floor heating system, thus improving the working efficiency of the floor heating system. Furthermore, when hot water for life is needed, it is possible to supply cold water for the hot water supply coil via the cold water inlet in real time and to heat the water inside the hot water supply coil by means of the hot water inside the water tank, thus avoiding a hidden danger of generating legionella inside the water tank due to a long-term storage of the water inside the water tank, realizing a real-time supply of water for life, and saving a water resource and an electric energy.

In some embodiments, the water tank is a pressurized water tank.

In some embodiments, the cold water inlet of the hot water supply coil is disposed at a lower portion of the water tank, and the hot water outlet of the hot water supply coil is disposed at an upper portion of the water tank so that the hot water flows upwardly.

In some embodiments, the inlet of the condenser coil is disposed at the upper portion of the water tank, and the outlet of the condenser coil is disposed at the lower portion of the water tank so that the refrigerant in the condenser coil flows downwardly.

In some embodiments, the heat pump water heater further includes: a temperature measuring unit for measuring a temperature of the water in the water tank; and a controller connected with the temperature measuring unit and the fan respectively for adjusting a rotating speed of the fan according to the temperature of the water in the water tank.

In some embodiments, the temperature measuring unit includes at least one temperature sensor disposed within the water tank.

In some embodiments, the temperate measuring unit includes a temperature sensor disposed at the inlet of the evaporator.

In some embodiments, the heat pump water heater further includes: an ambient temperature sensor connected with the controller for measuring an ambient temperature.

In some embodiments, the heat pump water heater further includes: an electric heater disposed within the water tank for heating the water therein.

In some embodiments, the heat pump water heater further includes: an auxiliary heater; a circulation pipeline for connecting the auxiliary heater with the water tank; and a water pump disposed on the circulation pipeline for supplying the water in the water tank to the auxiliary heater.

In some embodiments, the circulation pipeline includes an inflow pipe and an outflow pipe connected between the water tank and the auxiliary heater respectively with the water pump being disposed on the outflow pipe.

According to embodiments of the present invention, a water tank assembly for a heat pump water heater is provided. The water tank assembly includes: a water tank having a circulating water inlet and a circulating water outlet; a condenser coil disposed within the water tank for heating water contained in the water tank; and a hot water supply coil disposed within the water tank such that water in the hot water supply coil exchanges heat with the water contained in the water tank, the hot water supply coil defining a cold water inlet end and a hot water outlet end.

In some embodiments, the water tank has a first through hole and a second through hole, and the cold water inlet end is extended out of the water tank through the first through hole and the hot water outlet end is extended out of the water tank through the second through hole.

In some embodiments, the water tank has a first through hole and a second through hole, and first pipe joints are mounted at inner and outer ends of the first through hole respectively, and second pipe joints are mounted at inner and outer ends of the second through hole respectively; the cold water inlet end is detachably connected with a first pipe joint mounted at the inner end of the first through hole and the hot water outlet end is detachably connected with a second pipe joint mounted at the inner end of the second through hole.

In some embodiments, the water tank has a third through hole and a fourth through hole, and the condenser coil defines a first end extended out of the water tank through the third through hole and a second end extended out of the water tank through the fourth through hole.

These and other aspects and advantages of the invention will be present in the following descriptions, and part of them will become apparent and more readily appreciated from the following descriptions, or be understood through the embodiment of the present invention.

### BRIEF DESCRIPTION OF THE DRAWINGS

These and other aspects and advantages of the invention will become apparent and more readily appreciated from the following descriptions taken in conjunction with the drawings in which:
Fig. 1 is a schematic view of a heat pump water heater according to an embodiment of the present invention;
Fig. 2 is a schematic view of a water tank assembly for a heat pump water heater according to an embodiment of the present invention;
Fig. 3 is a schematic view of a water tank assembly for a heat pump water heater according to another embodiment of the present invention.

### Reference numerals:

- 10: water tank
- 11: circulating water inlet
- 12: circulating water outlet
- 13: first through hole
- 14: second through hole
- 15: third through hole
- 16: fourth through hole
- 20: hot water supply coil
- 21: cold water inlet
- 22: hot water outlet
- 23: cold water inlet end
- 24: hot water outlet end
- 30: compressor
- 40: condenser coil
- 41: first end
- 42: second end
- 50: throttling unit
- 60: evaporator
- 70: auxiliary heating system
- 71: auxiliary heater
- 72: circulation pipeline
- 721: inflow pipe
- 722: outflow pipe
- 73: water pump
- 80: fan
- 90: electric heater
- 91: temperature measuring unit
- 100: water tank assembly
- 110: first pipe joint
- 120: second pipe joint

### DETAILED DESCRIPTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

In the specification, unless specified or limited otherwise, relative terms such as "central", "longitudinal", "lateral", "front", "rear", "right", "left", "inner", "outer", "lower", "upper", "horizontal", "vertical", "above", "below", "up", "top", "bottom", "peripheral" as well as derivative thereof (e.g., "horizontally", "downwardly", "upwardly", etc.) should be construed to refer to the orientation as then described or as shown in the drawings under discussion. These relative terms are for convenience of description and do not require that the present invention be constructed or operated in a particular orientation. In addition, terms such as "first" and "second" are used herein for purposes of description and are not intended to indicate or imply relative importance or significance.

In the description of the present invention, it should be noticed that unless specified or limited otherwise, the terms "mounted," "connected," "supported," and "coupled" and variations thereof are used broadly and encompass both direct and indirect mountings, connections, supports, and couplings. For the general technician in the field, the above terms can be understood according to the detail embodiment of the present invention.

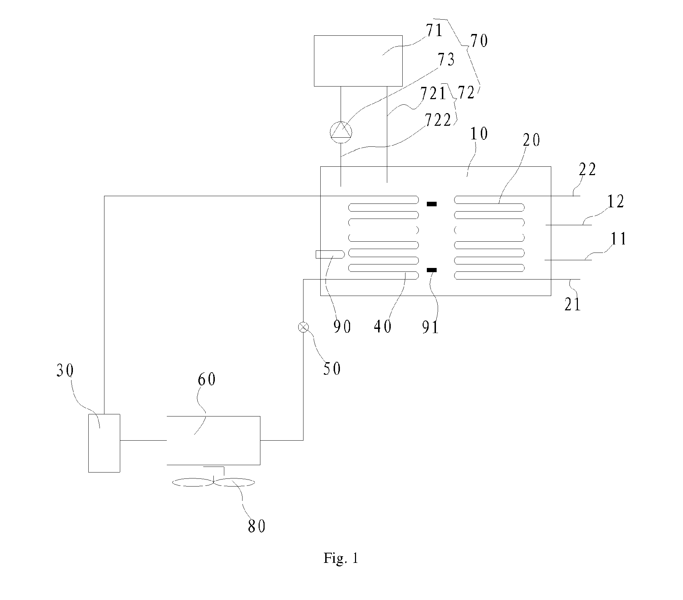

Fig. 1 is a schematic view of a heat pump water heater according to an embodiment of the present invention. As shown in Fig. 1, the heat pump water heater includes a water tank 10, a hot water supply coil 20, a compressor 30, a condenser coil 40, a throttling unit 50, an evaporator 60 and a fan 80.

Specifically, the water tank 10 is provided with a circulating water inlet 11 and a circulating water outlet 12 communicated with an interior of the water tank 10. The interior of the water tank 10 can be communicated with a floor heating system via the circulating water inlet 11 and the circulating water outlet 12. Thus, hot water in the water tank 10 can flow into the floor heating system through the circulating water inlet 11, and then flow back to the interior of the water tank 10 through the circulating water outlet 12 after heat exchange, thus realizing supplying heat for the floor heating system by means of the hot water inside the water tank 10. In one preferred embodiment, the hot water supply coil 20 may be a life hot water supply coil for supplying hot water for life. The hot water supply coil 20 is disposed within the water tank 10 and has a cold water inlet 21 and a hot water outlet 22 isolated from the interior of the water tank 10. The cold water inlet 21 may be connected with a water source for supplying water for life. After the water flowing into the hot water supply coil 20 through the cold water inlet 21 exchanges heat with the water inside the water tank 10, the water inside the hot water supply coil 20 is heated, and then the heated water flows out of the hot water supply coil 20 through the hot water outlet 22. In other words, the hot water flowing out through the hot water outlet 22 is the hot water for life, which can be supplied to users. The compressor 30 has a refrigerant inlet and a refrigerant outlet. The condenser coil 40 is disposed within the water tank 10 for heating water inside the water tank 10, and an inlet of the condenser coil 40 is connected with the refrigerant outlet of the compressor 30. An inlet of the throttling unit 50 is connected with an outlet of the condenser coil 40. An inlet of the evaporator 60 is connected with an outlet of the throttling unit 50, and an outlet of the evaporator 60 is connected with the refrigerant inlet of the compressor 30. The fan 80 is disposed adjacent to the evaporator 60 for improving the heat exchange efficiency of the evaporator 60.

Alternatively, the evaporator 60 may be a finned evaporator. The fan 80 may have at least two gears of rotating speed, and the rotating speed of the fan 80 may be adjusted according to parameters of a temperature measuring unit 91. The temperature measuring unit 91 may be disposed within the water tank 10, at the inlet of the evaporator 60, or outside the water tank 10. When temperature parameters (at least one temperature parameter) of the temperature measuring unit 91 are relatively high, the pressure of the refrigerating system of the heat pump water heater will be relatively high. When the pressure of the refrigerating system exceeds an allowable pressure range of the compressor 30, the reliability of the compressor 30 will be reduced significantly. Thus, it is beneficial to decrease the pressure of the refrigerating system by decreasing the rotating speed of the fan 80, thus ensuring a reliability of the compressor 30. In this case, when the pressure of the refrigerating system is the same, the water of the heat pump water heater can be heated to a higher temperature.

It should be understood that in some embodiments, the water inside the water tank 10 can be sterilized by controlling the temperature of the water inside the water tank 10. For example, it is possible to destroy the living environment of the legionella inside the water tank 10 by increasing the temperature of the water inside the water tank 10 to a temperature not lower than 60°C, so as to realize the sterilization. The user can set (or default) the sterilization time, and also can set (or default) the temperature of the water inside the water tank 10 when sterilizing.

With the heat pump water heater according to embodiments of the present invention, the interior of the water tank can be directly connected with a floor heating system via the circulating water inlet and the circulating water outlet of the floor heating system, and thus hot water inside the water tank can be directly provided for the floor heating system, thus improving the working efficiency of the floor heating system. Furthermore, when hot water for life is needed, it is possible to supply cold water for the hot water supply coil via the cold water inlet in real time and to heat the water inside the hot water supply coil by means of the hot water inside the water tank, thus avoiding a hidden danger of generating legionella inside the water tank due to a long-term storage of the water inside the water tank, realizing a real-time supply of water for life, and saving a water resource and an electric energy.

In some embodiments, the water tank 10 may be a pressurized water tank. The pressurized water tank has great safety and long use life. In some embodiments, the cold water inlet 21 of the hot water supply coil 20 is disposed at a lower portion of the water tank 10, and the hot water outlet 22 of the hot water supply coil 20 is disposed at an upper portion of the water tank 10. Thus, the hot water for domesticity flows from down to up, thus ensuring that the water flowing out of the hot water supply coil 20 has a relatively high temperature.

In some embodiments, the inlet of the condenser coil 40 is disposed at the upper portion of the water tank 10, and the outlet of the condenser coil 40 is disposed at the lower portion of the water tank 10. Thus, the refrigerant flows from up to down, thus ensuring that the water in the upper portion of the water tank 10 has a higher temperature than water in the lower portion of the water tank 10.

In some embodiments, the heat pump water heater may further include a temperature measuring system. The temperature measuring system includes a temperature measuring unit 91 and a first controller (not shown). The temperature measuring unit 91 is used to measure the temperature of the water inside the water tank 10. The first controller is connected with the temperature measuring unit 91 and the fan 80 respectively. Thus, the first controller can adjust the rotating speed of the fan 80 according to the temperature of the water inside the water tank 10, so as to realize a control on the water temperature. In some embodiments, the temperature measuring unit 91 may include at least one temperature sensor disposed within the water tank 10. Thus, it is possible to provide more precise temperature information for the controller.

According to another embodiment of the present invention, the temperature measuring unit 91 may include a temperature sensor (not shown) disposed at the inlet of the evaporator 60. The temperature sensor can measure the temperature at the inlet of the evaporator 60, and thus the temperature of the water inside the water tank 10 can be estimated. In some embodiments, the heat pump water heater may further include an ambient temperature sensor (not shown) for measuring the ambient temperature. The ambient temperature sensor is connected with a second controller to transmit the ambient temperature information to the second controller. It could be understood that the second controller and the first controller may be controllers independently disposed, or may be a single controller.

In some embodiments, the heat pump water heater may further include an electric heater 90 for heating the water inside the water tank 10. The electric heater 90 may be disposed within the water tank 10.

In some embodiments, the heat pump water heater may further include an auxiliary heating system 70. The auxiliary heating system 70 may include an auxiliary heater 71, a circulation pipeline 72 and a water pump 73. The circulation pipeline 72 is used to connect the auxiliary heater 71 with the water tank 10. The water pump 73 is used to supply the water inside the water tank 10 to the auxiliary heater 71. The water pump 73 may be disposed on the circulation pipeline 72. Thus, the water inside the water tank 10 is pumped into the auxiliary heater 71 and heated by the auxiliary heater 71, and then the heated water is sent back into the water tank 10.

In one embodiment, the circulating pipeline 72 may include an inflow pipe 721 and an outflow pipe 722. The inflow pipe 721 and the outflow pipe 722 may be connected between the water tank 10 and the auxiliary heater 71 respectively. The water pump 73 may be disposed on the outflow pipe 722. Thus, it is convenient to pump the water inside the water tank 10 into the auxiliary heater 71.

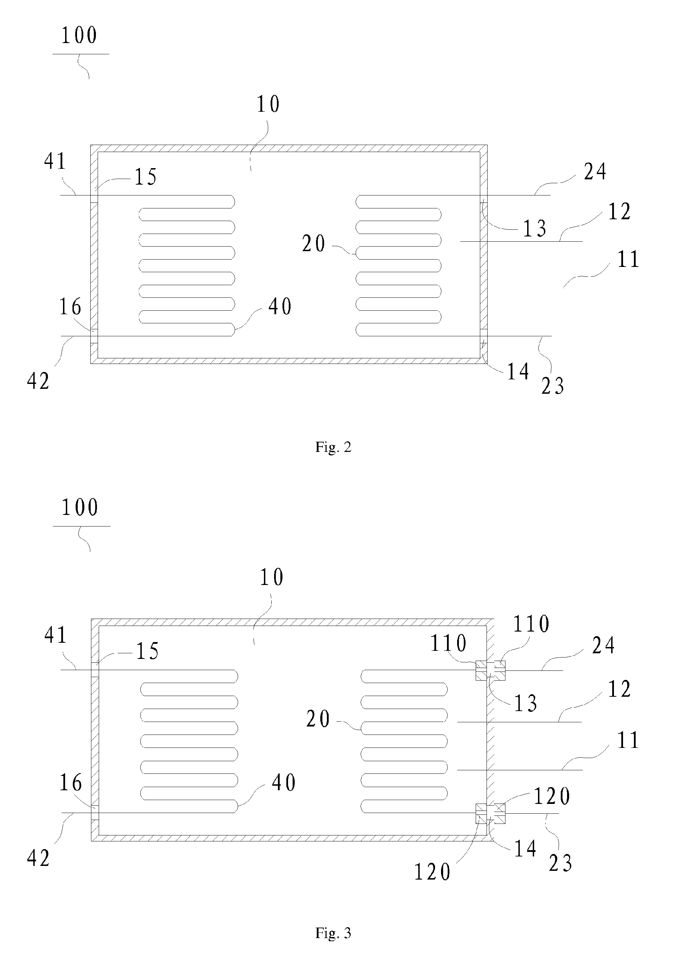

According to an embodiment of the present invention, a water tank assembly for a heat pump water heater is provided. As shown in Fig. 2, the water tank assembly 100 includes a water tank 10, a condenser coil 40 and a hot water supply coil 20. The water tank 10 has a circulating water inlet 11 and a circulating water outlet 12. The condenser coil 40 is disposed within the water tank 10 for heating water contained in the water tank 10. The hot water supply coil 20 is disposed within the water tank 10 such that water in the hot water supply coil 20 exchanges heat with the water contained in the water tank 10. The hot water supply coil 20 has a cold water inlet end 23 and a hot water outlet end 24.

In one embodiment, the water tank 10 has a first through hole 13 and a second through hole 14. The cold water inlet end 23 is extended out of the water tank 10 through the first through hole 13 and the hot water outlet end 24 is extended out of the water tank 10 through the second through hole 14.

In another embodiment, the water tank 10 has a first through hole 13 and a second through hole 14. As shown in Fig. 3, first pipe joints 110 are mounted at inner and outer ends of the first through hole 13 respectively, and second pipe joints 120 are mounted at inner and outer ends of the second through hole 14 respectively. The cold water inlet end 23 is detachably connected with a first pipe joint 110 mounted at the inner end of the first through hole 13 and the hot water outlet end 24 is detachably connected with a second pipe joint 120 mounted at the inner end of the second through hole 14.

In some embodiments, the water tank 10 has a third through hole 15 and a fourth through hole 16. The condenser coil 40 defines a first end 41 extended out of the water tank 10 through the third through hole 15 and a second end 42 extended out of the water tank 10 through the fourth through hole 16.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present invention. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present invention. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present invention, and changes, alternatives, and modifications can be made in the embodiments without departing from spirit, principles and scope of the present invention.

## Claims

1. A heat pump water heater, comprising:
a water tank having a circulating water inlet and a circulating water outlet communicated with an interior of the water tank;
a hot water supply coil disposed within the water tank and having a cold water inlet and a hot water outlet isolated from the interior of the water tank;
a compressor having a refrigerant inlet and a refrigerant outlet;
a condenser coil disposed within the water tank for heating water contained in the water tank, an inlet of the condenser coil being connected with the refrigerant outlet of the compressor;
a throttling unit having an inlet connected with an outlet of the condenser coil;
an evaporator having an inlet connected with an outlet of the throttling unit and an outlet connected with the refrigerant inlet of the compressor; and
a fan disposed adjacent to the evaporator.

2. The heat pump water heater according to claim 1, wherein the water tank is a pressurized water tank.

3. The heat pump water heater according to claim 1 or 2, wherein the cold water inlet of the hot water supply coil is disposed at a lower portion of the water tank, and the hot water outlet of the hot water supply coil is disposed at an upper portion of the water tank so that the hot water flows upwardly.

4. The heat pump water heater according to any of claims 1-3, wherein the inlet of the condenser coil is disposed at the upper portion of the water tank, and the outlet of the condenser coil is disposed at the lower portion of the water tank so that the refrigerant in the condenser coil flows downwardly.

5. The heat pump water heater according to any of claims 1-4, further comprising:
a temperature measuring unit for measuring a temperature of the water in the water tank; and
a controller connected with the temperature measuring unit and the fan respectively for adjusting a rotating speed of the fan according to the temperature of the water in the water tank.

6. The heat pump water heater according to claim 5, wherein the temperature measuring unit comprises at least one temperature sensor disposed within the water tank.

7. The heat pump water heater according to claim 5, wherein the temperate measuring unit comprises a temperature sensor disposed at the inlet of the evaporator.

8. The heat pump water heater according to claim 5, further comprising:
an ambient temperature sensor connected with the controller for measuring an ambient temperature.

9. The heat pump water heater according to any of claims 1-8, further comprising:
an electric heater disposed within the water tank for heating the water therein.

10. The heat pump water heater according to any of claims 1-9, further comprising:
an auxiliary heater;
a circulation pipeline for connecting the auxiliary heater with the water tank; and
a water pump disposed on the circulation pipeline for supplying the water in the water tank to the auxiliary heater.

11. The heat pump water heater according to claim 10, wherein the circulation pipeline comprises an inflow pipe and an outflow pipe connected between the water tank and the auxiliary heater respectively with the water pump being disposed on the outflow pipe.

12. A water tank assembly for a heat pump water heater, comprising:
a water tank having a circulating water inlet and a circulating water outlet;
a condenser coil disposed within the water tank for heating water contained in the water tank; and
a hot water supply coil disposed within the water tank such that water in the hot water supply coil exchanges heat with the water contained in the water tank, the hot water supply coil defining a cold water inlet end and a hot water outlet end.

13. The water tank assembly for the heat pump water heater according to claim 12, wherein the water tank has a first through hole and a second through hole, and
wherein the cold water inlet end is extended out of the water tank through the first through hole and the hot water outlet end is extended out of the water tank through the second through hole.

14. The water tank assembly for the heat pump water heater according to claim 12, wherein the water tank has a first through hole and a second through hole, and
wherein first pipe joints are mounted at inner and outer ends of the first through hole respectively, and second pipe joints are mounted at inner and outer ends of the second through hole respectively;
wherein the cold water inlet end is detachably connected with a first pipe joint mounted at the inner end of the first through hole and the hot water outlet end is detachably connected with a second pipe joint mounted at the inner end of the second through hole.

15. The water tank assembly for the heat pump water heater according to any one of claims 12-14, wherein the water tank has a third through hole and a fourth through hole, and
wherein the condenser coil defines a first end extended out of the water tank through the third through hole and a second end extended out of the water tank through the fourth through hole.
